# EUROPÄISCHE PATENTSCHRIFT

(11) **EP 4 143 048 B1**
(45) Veröffentlichungstag und Bekanntmachung des Hinweises auf die Patenterteilung: **12.03.2025**
(21) Anmeldenummer: 21720714.1
(22) Anmeldetag: 19.04.2021
(51) Int. Cl.: B60K 35/65, B60K 35/81, B60K 35/23, B60K 35/28, B60K 35/29, G02B 27/01, H04N 21/41, H04N 21/414, H04N 21/44, H04N 21/442, H04N 21/4223, H04N 21/81, H04N 21/488

(54) **VERKEHRSSITUATIONS-ABHÄNGIGE STEUERUNG EINES VIRTUAL-REALITY-GERÄTS**
TRAFFIC SITUATION-DEPENDENT CONTROL OF A VIRTUAL REALITY DEVICE
COMMANDE DÉPENDANT DE LA SITUATION DE TRAFIC D'UN DISPOSITIF DE RÉALITÉ VIRTUELLE

(30) Priorität: 30.04.2020 DE 102020111827; 07.07.2020 DE 102020117852
(43) Veröffentlichungstag der Anmeldung: 08.03.2023
(73) Patentinhaber: Audi AG, 85045 Ingolstadt (DE)
(72) Erfinder: WEIGAND, Christoph, 85080 Gaimersheim (DE); MAYER, Stefan, 85080 Gaimersheim (DE)
(74) Vertreter: RDL Patentanwälte PartG mbB
(86) Internationale Anmeldenummer: PCT/EP2021/060064
(87) Internationale Veröffentlichungsnummer: WO 2021/219414

(56) Entgegenhaltungen:
- WO-A1-2020/035380
- DE-A1- 102013 222 580
- US-A1- 2017 113 702

## Beschreibung

Die Erfindung betrifft ein Verfahren zum Steuern eines VR-Geräts, insbesondere einer VR-Brille, eines Benutzers in einem Fahrzeuginnenraum eines Fahrzeugs über eine Kommunikationsverbindung sowie eine Fahrzeuganordnung.

Es sind derzeit verschiedene theoretische Anwendungsmöglichkeiten für Virtual-Reality-Headsets bzw. VR-Geräte im Fahrzeugbereich bekannt, welche bislang in der Entwicklung sind. Beispielsweise sind Programmbibliotheken bekannt, die es Entwicklern von VR-Medienformaten erlauben, diese Inhalte auf die Fahrzeugbewegungen abzustimmen. Durch die Implementierung der Fahrzeugbewegung in die Ausgabe der VR-Medienformate kann eine intensivere Immersion des Benutzers des VR-Geräts realisiert werden. Des Weiteren kann die Einbeziehung der Fahrzeugbewegung in einer Minimierung der Neigung zu sogenannter Motion-Sickness resultieren.

Bei der Nutzung eines VR-Geräts im Fahrzeug ist der Benutzer von den Geschehnissen im und um das Fahrzeug abgeschirmt. Einerseits fördert dies das immersive Erlebnis, andererseits ist der Benutzer des VR-Geräts auch von bedeutenden Vorfällen im Fahrzeug abgekoppelt. Beispielsweise kann der Benutzer eine drohende Unfallsituation im Fahrzeug nicht direkt wahrnehmen bzw. sich auf die drohende Unfallsituation einstellen. Hierdurch kann der Benutzer des VR-Geräts erschreckt oder überrascht werden.

WO 2020/035380 A1 betrifft ein Verfahren und System zum Betreiben einer VR-Brille während einer autonomen Fahrt eines Fahrzeugs, bei dem ein Fahrzeug autonom fährt, ein Fahrer des Fahrzeugs eine mit einem Multimediagerät verbundene VR-Brille trägt und die VR-Brille ein Unterhaltungsprogramm des Multimediageräts für den Fahrer anzeigt.

US 2017/113702 A1 offenbart ein Sicherheitssystem für ein autonomes Fahrzeug, das verwendet werden kann, um einen Insassen bei einer bestimmten Aktivität zu warnen, bei der es um den Umgang mit einem Objekt geht, das dem Insassen im Falle einer plötzlichen Verschlechterung der Fahrruhe (einem SDRS-Ereignis) schaden könnte. Das Sicherheitssystem umfasst eine Kamera, die Bilder des Insassen aufnimmt, und einen Computer, der anhand der Bilder abschätzt, ob der Insasse eine bestimmte Aktivität ausübt. Der Computer erhält von einem autonomen Fahrsteuerungssystem einen Hinweis darauf, ob ein SDRS-Ereignis unmittelbar bevorsteht. Als Reaktion auf den Empfang eines Hinweises auf ein bevorstehendes SDRS-Ereignis und die Einschätzung, dass der Insasse an einer bestimmten Aktivität beteiligt ist, weist der Computer eine Benutzerschnittstelle an, den Insassen kurz vor dem SDRS-Ereignis zu warnen.

Aus DE 10 2013 222580 A1 ist ein Verfahren zum Detektieren einer aufgesetzten Datenbrille bei einem Fahrer in einem Fahrzeug bekannt, bei dem mittels einer Sensorik im Fahrzeug festgestellt wird, ob der Fahrer eine Datenbrille trägt, und in diesem Fall ein Warnsignal erzeugt wird.

Es ist die Aufgabe der vorliegenden Erfindung, ein Verfahren und eine Fahrzeuganordnung bereitzustellen, durch welche ein Benutzer eines Virtual-Reality-Geräts vor einem Erschrecken bzw. Überraschen geschützt wird.

Erfindungsgemäß wird diese Aufgabe durch ein Verfahren mit den Merkmalen des Anspruchs 1 und eine Fahrzeuganordnung mit den Merkmalen des Anspruchs 7 gelöst. Vorteilhafte Ausgestaltungen und Weiterbildungen ergeben sich aus den abhängigen Ansprüchen.

Das erfindungsgemäße Verfahren dient zum Steuern eines VR-Geräts, insbesondere einer VR-Brille, eines Benutzers in einem Fahrzeuginnenraum eines Fahrzeugs über eine Kommunikationsverbindung. Bei dem erfindungsgemäßen Verfahren werden über die Kommunikationsverbindung Fahrzeugdaten empfangen und ausgewertet oder bereits ausgewertete Fahrzeugdaten empfangen. Anhand der ausgewerteten Fahrzeugdaten wird mindestens ein Verkehrsereignis klassifiziert, wobei Steuerbefehle zum Steuern des VR-Geräts erzeugt werden, durch welche der Benutzer des VR-Geräts auf eine für den Benutzer unvorhersehbare Reaktion des Fahrzeugs auf das Verkehrsereignis hingewiesen wird. Erfindungsgemäß werden Steuerbefehle zum Steuern des VR-Geräts erzeugt, welche einen Kommunikationsbedarf eines Fahrzeugpassagiers mit dem Benutzer des VR-Geräts signalisieren.

Durch das Verfahren kann eine Weiterleitung spezifischer Informationen aus dem Fahrzeug an das VR-Gerät und eine Anzeige derselben umgesetzt werden. Dabei kann beispielsweise ein Datenkanal zwischen dem Fahrzeug und dem VR-Gerät verwendet werden, welcher zur Bewegungskompensation bei der Benutzung des VR-Geräts nutzbar ist. Der Datenkanal kann beispielsweise auf einer drahtlosen oder drahtgebundenen Kommunikationstechnologie, wie beispielsweise WLAN, Bluetooth, NFC, Funk, Infrarot, Ethernet, USB und dergleichen basieren.

Das VR-Gerät kann beispielsweise als ein Virtual-Reality-Headset ausgestaltet sein. Dabei kann eine Ausgabe von VR-Medieninhalten über mindestens ein in das Virtual-Reality-Headset integrierte Display oder über ein in das Virtual-Reality-Headset eingesetzte tragbare Gerät, wie beispielsweise ein Smartphone, erfolgen. Das VR-Gerät kann weiterhin Kopfhörer, Kamerasensoren, Mikrofone und dergleichen aufweisen, um die Immersion des Benutzers zu optimieren.

Die Kommunikationsverbindung kann vorzugsweise auf einem drahtlosen Übertragungsstandard, wie beispielsweise Bluetooth, basieren und zwischen einem fahrzeugseitigen Steuergerät und dem VR-Gerät ausgebildet sein. Durch die datenleitende Kopplung des VR-Geräts mit dem Fahrzeug kann dem Benutzer nach wie vor ein immersives VR-Erlebnis bereitgestellt werden. Durch das erfindungsgemäße Verfahren kann der Benutzer über besondere Vorkommnisse im und um das Fahrzeug informiert werden. Das VR-Gerät kann somit auf Verkehrsereignisse reagieren, um ein Erschrecken des Benutzers des VR-Geräts zu verhindern. Durch das Verfahren kann somit der Komfort bei der Benutzung von VR-Medieninhalten während einer Fahrt erhöht werden.

Das mindestens eine Verkehrsereignis kann auf Grundlage von Fahrzeugsignalen bzw. Fahrzeugdaten definiert bzw. klassifiziert werden. Die Fahrzeugdaten können auch mittelbar dem Benutzer des VR-Geräts im Fahrzeug bereitgestellt werden, um eine Verkehrssituations-abhängige Steuerung des VR-Geräts zu ermöglichen.

Es werden Verkehrsereignisse, wie beispielsweise drohende Auffahrunfälle oder erfolgreiche Fußgängererkennung, fahrzeugseitig durch Steuergeräte bereits registriert bevor eine Reaktion des Fahrzeugs erfolgt. Die entsprechenden Auswerteergebnisse können in Form von ausgewerteten Fahrzeugdaten oder direkt in Form von Steuerbefehlen an das VR-Gerät übermittelt werden. Somit können fahrzeugseitige Instanzen, welche auf die fahrzeugseitige Sensorik zugreifen, zum Steuern des VR-Geräts herangezogen werden. Alternativ oder zusätzlich kann eine Auswertung der Fahrzeugdaten durch das VR-Gerät erfolgen.

Gemäß einem Ausführungsbeispiel werden die Steuerbefehle zum Ausgeben einer Meldung in einer Anzeige des VR-Geräts, Aktivieren einer Transparenz des VR-Geräts, Ausgeben einer akustischen oder grafischen Benachrichtigung, zum Pausieren oder Beenden einer Applikation des VR-Geräts und/oder zum Aufheben einer Geräuschunterdrückungsfunktion erzeugt. Hierdurch kann eine Benachrichtigung des Benutzers des VR-Geräts generiert werden, welche ein Erschrecken des Benutzers verhindert.

Die Meldung in der Anzeige des VR-Geräts kann in Form einer Warnung oder eines Hinweises erfolgen. Dabei können akustische, haptische und/oder optische Meldungen bzw. Benachrichtigungen als Reaktionen auf die erzeugten Steuerbefehle durch das VR-Gerät ausgegeben werden.

Bei einer weiteren Ausführungsform wird der Benutzer des VR-Geräts auf eine Reaktion des Fahrzeugs auf das Verkehrsereignis in Form einer Aktivierung eines Notbremsassistenten, eines Ausweichmanövers des Fahrzeugs, einer Ankunft oder Annäherung an einen Zielort, einer ausgelösten Müdigkeitserkennung oder eines von einer Fahrzeugsensorik erkannten Objekts hingewiesen. Bei derartigen Verkehrsereignissen kann das Fahrzeug als Reaktion ein Bremsmanöver oder ein Ausweichmanöver einleiten, welches durch den Benutzer des VR-Geräts plötzlich und ohne Vorwarnung wahrgenommen wird. Durch das Verfahren kann im Vorfeld zu derartigen Reaktionen des Fahrzeugs der Benutzer des VR-Geräts berücksichtigt und benachrichtigt werden. Eine derartige Ansteuerung des VR-Geräts ermöglicht eine Vorwarnung bzw. eine Einstellung des Benutzers auf die bevorstehende Reaktion des Fahrzeugs, wodurch der Fahrkomfort für den Benutzer erhöht wird.

Wird der Fahrer durch eine Müdigkeitserkennung des Fahrzeugs als müde erkannt, kann der Benutzer des VR-Geräts direkt oder indirekt darauf hingewiesen werden, sodass er beispielsweise dazu beitragen kann, den Fahrer des Fahrzeugs wach und aktiv zu halten. Beispielsweise könnten dem Benutzer des VR-Geräts Medienangebote vorgeschlagen werden, die eine Kollaboration mit einem weiteren Nicht-VR-Nutzer, wie beispielsweise dem Fahrer oder einem weiteren Fahrzeugpassagier, erfordern. Ein derartiger VR-Medieninhalt kann beispielsweise als ein Quiz ausgestaltet sein.

Der Benutzer des VR-Geräts kann vorzugsweise ein Fahrzeugpassagier sein, welcher auf einer Rücksitzbank oder einem Beifahrersitz im Fahrzeuginnenraum sitzt. Das Fahrzeug kann dabei automatisiert, teilautomatisiert oder manuell durch einen Fahrer gesteuert werden. Der Benutzer des VR-Geräts ist vorzugsweise von der Steuerung des Fahrzeugs ausgeschlossen.

Bei einer weiteren Ausgestaltung wird der Kommunikationsbedarf des Fahrzeugpassagiers mit dem Benutzer des VR-Geräts durch eine fahrzeugseitige Eingabe des Fahrzeugpassagiers eingeleitet.

Bei einem Kommunikationsbedarf kann mindestens ein Fahrzeugpassagier eine Eingabe über eine Mediensteuerung des Fahrzeugs ausführen, um diesen Kommunikationsbedarf dezent dem Benutzer des VR-Geräts mitzuteilen. Dies kann beispielsweise in Form einer Aktivierung eines Buttons in einer grafischen Oberfläche der Mediensteuerung, durch Drücken einer Taste oder durch Nutzung eines sprachgestützten Fahrzeugassistenten umgesetzt werden.

Der Benutzer des VR-Geräts kann über die Kommunikationsverbindung eine Benachrichtigung erhalten. Die Benachrichtigung bzw. der Hinweis auf den Kommunikationsbedarf kann als Textnachricht im VR-Gerät eingeblendet, als Sprachnachricht über Kopfhörer wiedergegeben oder als eine Deaktivierung einer Geräuschunterdrückung der Kopfhörer signalisiert werden. Im Gegensatz zu einer direkten Kontaktaufnahme, beispielsweise durch Berühren, mit dem Benutzer des VR-Geräts kann ein Erschrecken des Benutzer des VR-Geräts durch die indirekte Kommunikation über die Kommunikationsverbindung mit dem Fahrzeug verhindert werden.

Gemäß einem weiteren Ausführungsbeispiel werden die Steuerbefehle zum Steuern des VR-Geräts durch ein fahrzeugseitiges Steuergerät und/oder durch eine Prozessoreinheit des VR-Geräts erzeugt. Durch diese Maßnahme können die Berechnung der Steuerbefehle und die Klassifizierung des mindestens einen Verkehrsereignisses fahrzeugseitig oder durch das VR-Gerät erfolgen. Insbesondere können bereits vom Fahrzeug durchgeführte Berechnungen, Warnungen und Rechenergebnisse vom VR-Gerät genutzt werden, um den Leistungsbedarf des VR-Geräts zu verringern und die Batterielaufzeit des VR-Geräts zu erhöhen.

Nach einer weiteren Ausführungsform werden Fahrzeugdaten und/oder ausgewertete Fahrzeugdaten zwischen dem fahrzeugseitigen Steuergerät und dem VR-Gerät über eine als eine Bluetooth-Verbindung oder eine WLAN-Verbindung ausgestaltete Kommunikationsverbindung übertragen. Durch diese Maßnahme kann eine Kommunikationsverbindung basierend auf unterschiedlichen drahtlosen Übertragungsstandards ausgebildet werden, welche eine Übertragung von Fahrzeugdaten für fahrdynamikabhängige VR-Erlebnisse ermöglicht.

Die Kommunikationsverbindung kann vorzugsweise als ein bidirektionaler Datenkanal zwischen dem Fahrzeug bzw. dem fahrzeugseitigen Steuergerät und dem VR-Gerät realisiert sein. Die entsprechende Kommunikationsverbindung kann auf einer oder mehreren fahrzeuginternen oder fahrzeugexternen Übertragungstechnologien, wie beispielsweise Bluetooth, WLAN, LTE, 5G und dergleichen, basieren.

Die erfindungsgemäße Fahrzeuganordnung weist ein Fahrzeug mit einem fahrzeugseitigen Steuergerät und mindestens ein VR-Gerät auf. Die Fahrzeuganordnung ist dazu eingerichtet, das erfindungsgemäße Verfahren auszuführen.

Die Fahrzeuganordnung ermöglicht die Nutzung von VR-Geräten, wie beispielsweise VR-Brillen oder VR-Headsets, auf einem Rücksitz oder einem Beifahrersitz des Fahrzeugs, unabhängig davon, ob die Fahrt automatisiert oder manuell gesteuert ist. Dabei kann der Benutzer des VR-Geräts auf eine für den Benutzer unvorhersehbare Reaktion des Fahrzeugs auf ein Verkehrsereignis hingewiesen werden, um ein Erschrecken oder ein Überraschen des Benutzers zu vermeiden und den Fahrkomfort für den Benutzer zu erhöhen.

Die Erfindung ist anhand von Ausführungsformen in den Zeichnungen schematisch dargestellt und wird unter Bezugnahme auf die Zeichnungen weiter beschrieben. Es zeigt:

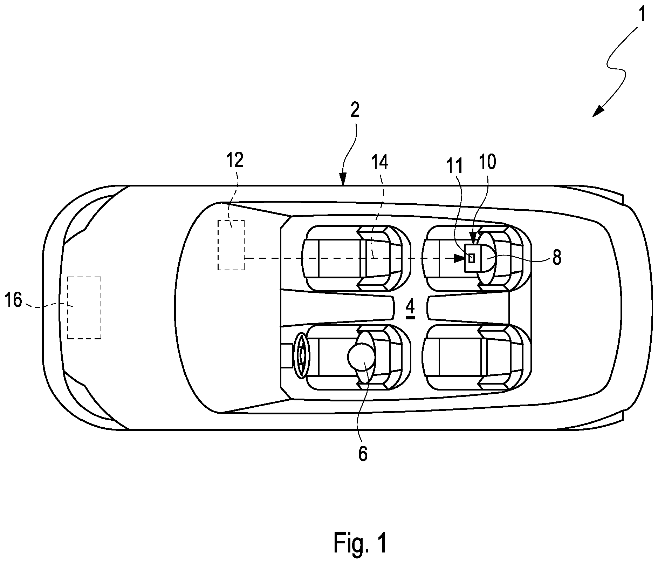

Figur 1 eine Fahrzeuganordnung gemäß einem erfindungsgemäßen Ausführungsbeispiel.

Figur 1 zeigt eine Fahrzeuganordnung 1 gemäß einem erfindungsgemäßen Ausführungsbeispiel. Die Fahrzeuganordnung 1 weist ein Fahrzeug 2 auf, welches als ein automatisiert betreibbares oder als ein manuell gesteuertes Fahrzeug ausgestaltet sein kann. In einem Fahrzeuginnenraum 4 des Fahrzeugs 2 befinden sich beispielhaft zwei Fahrzeugpassagiere 6, 8.

Ein erster Fahrzeugpassagier ist ein Fahrer des Fahrzeugs 2. Ein zweiter Fahrzeugpassagier 8 trägt ein Virtual-Reality-Headset bzw. ein VR-Gerät 10. Der zweite Fahrzeugpassagier 8 ist somit ein Benutzer 8 des VR-Geräts 10. Der erste Fahrzeugpassagier 6 ist ein sogenannter Nicht-VR-Nutzer.

Zwischen einem fahrzeugseitigen Steuergerät 12 und dem VR-Gerät 10 ist eine datenleitende Kommunikationsverbindung 14 hergestellt, welche beispielsweise auf einem Bluetooth Übertragungsstandard basiert. Über die Kommunikationsverbindung 14 können Fahrzeugdaten empfangen und ausgewertet werden oder ausgewertete Fahrzeugdaten empfangen werden. Die Fahrzeugdaten können beispielsweise von einer Fahrzeugsensorik 16 ermittelt oder empfangen werden. Zusätzlich können Informationen einer Routenführung in Form von Fahrzeugdaten berücksichtigt werden.

Die Fahrzeugsensorik 16 kann beispielsweise Kamerasensoren, LIDAR-Sensoren, Radarsensoren und dergleichen aufweisen.

Anhand der ausgewerteten Fahrzeugdaten kann durch das fahrzeugseitige Steuergerät 12 oder von einer Prozessoreinheit 11 des VR-Geräts 10 eine Klassifizierung einer Verkehrssituation bzw. eines Verkehrsereignisses durchgeführt werden. Basierend auf dem Verkehrsereignis kann eine Reaktion des Fahrzeugs 2 auf das Verkehrsereignis abgeschätzt werden.

Als mögliche Verkehrsereignisse können beispielsweise kritischen Fahrsituationen klassifiziert werden. Bei kritischen Fahrsituationen wird ein Sicherheitsabstand des Fahrzeugs 2 unterschritten, sodass ein Ausweichmanöver oder ein Notbremsmanöver eingeleitet wird. Derartige Fahrmanöver können automatisiert durch das fahrzeugseitige Steuergerät 12 bzw. durch eine Notbremsassistenzfunktion oder durch den Fahrer 6 eingeleitet werden. Die entsprechende Fahrsituation kann oftmals bereits im Vorfeld anhand der Fahrzeugsensorik 16 festgestellt werden.

Nach einer Klassifizierung des Verkehrsereignisses werden Steuerbefehle zum Steuern des VR-Geräts 10 erzeugt, um den Benutzer 8 des VR-Geräts 10 auf eine für den Benutzer 8 unvorhersehbare Reaktion des Fahrzeugs 2 bzw. des Fahrers 6 auf das Verkehrsereignis hinzuweisen und ein Erschrecken des Benutzers 8 zu vermeiden. Hierzu kann eine Einblendung einer Warnmeldung in der VR-Anzeige des VR-Geräts 10 durch die erzeugten Steuerbefehle veranlasst werden.

Je nach Ausgestaltung des VR-Geräts 10 kann eine See-Through-Funktion durch die erzeugten Steuerbefehle aktiviert werden. Zur Positionierung des VR-Geräts 10 im Raum weisen manche VR-Geräte 10 Kamerasysteme auf, mit welchen die Umgebung erfasst und ausgewertet wird. Eine See-Through-Funktion blendet anstelle der VR-Anzeige den Videostrom eines solchen Kamerasystems ein, um dem Benutzer 8 eine Sicht hinter das VR-Gerät 10 zu ermöglichen. Die See-Through-Funktion kann somit Verkehrssituationsgetrieben aktiviert und deaktiviert werden, um den Benutzer 8 auf eventuelle Reaktionen des Fahrzeugs 2 vorzubereiten.

Bei einem weiteren beispielhaften Verkehrsereignis kann das Fahrzeug 2 einen Zielort erreichen. Dies kann basierend auf Fahrzeugdaten in Form von Navigationsdaten registriert werden. Bei einer Annäherung an den Zielort kann eine Einblendung eines entsprechenden Hinweises in dem VR-Gerät 10 erfolgen, damit der Benutzer 8 sich auf ein Ende der VR-Nutzung vorbereiten kann.

### BEZUGSZEICHENLISTE:

- 1: Fahrzeuganordnung
- 2: Fahrzeug
- 4: Fahrzeuginnenraum
- 6: erster Fahrzeugpassagier / Fahrer
- 8: zweiter Fahrzeugpassagier / Benutzer des VR-Geräts
- 10: VR-Gerät / Virtual-Reality-Headset
- 11: Prozessoreinheit des VR-Geräts
- 12: fahrzeugseitiges Steuergerät
- 14: Kommunikationsverbindung
- 16: Fahrzeugsensorik

## Patentansprüche

1. Verfahren zum Steuern eines VR-Geräts (10), insbesondere einer VR-Brille, eines Benutzers (8) in einem Fahrzeuginnenraum (4) eines Fahrzeugs (2) über eine Kommunikationsverbindung (14), wobei über die Kommunikationsverbindung (14) Fahrzeugdaten empfangen und ausgewertet werden oder ausgewertete Fahrzeugdaten empfangen werden, und anhand der ausgewerteten Fahrzeugdaten mindestens ein Verkehrsereignis klassifiziert wird, und Steuerbefehle zum Steuern des VR-Geräts (10) erzeugt werden, durch welche der Benutzer (8) des VR-Geräts (10) auf eine für den Benutzer (8) unvorhersehbare Reaktion des Fahrzeugs (2) auf das Verkehrsereignis hingewiesen wird, **dadurch gekennzeichnet, dass** Steuerbefehle zum Steuern des VR-Geräts (10) erzeugt werden, welche einen Kommunikationsbedarf eines Fahrzeugpassagiers (6) mit dem Benutzer (8) des VR-Geräts (10) signalisieren.

2. Verfahren nach Anspruch 1, wobei der Kommunikationsbedarf des Fahrzeugpassagiers (6) mit dem Benutzer (8) des VR-Geräts (10) durch eine fahrzeugseitige Eingabe des Fahrzeugpassagiers (6) eingeleitet wird.

3. Verfahren nach Anspruch 1 oder 2, wobei die Steuerbefehle zum Ausgeben einer Meldung in einer Anzeige des VR-Geräts (10), Aktivieren einer Transparenz des VR-Geräts (10), Ausgeben einer akustischen oder grafischen Benachrichtigung, zum Pausieren oder Beenden einer Applikation des VR-Geräts (10) und/oder zum Aufheben einer Geräuschunterdrückungsfunktion erzeugt werden.

4. Verfahren nach einem der Ansprüche 1 bis 3, wobei der Benutzer (8) des VR-Geräts (10) auf eine Reaktion des Fahrzeugs (2) auf das Verkehrsereignis in Form einer Aktivierung eines Notbremsassistenten, eines Ausweichmanövers des Fahrzeugs (2), einer Ankunft oder Annäherung an einen Zielort, einer ausgelösten Müdigkeitserkennung oder eines von einer Fahrzeugsensorik (16) erkannten Objekts hingewiesen wird.

5. Verfahren nach einem der Ansprüche 1 bis 4, wobei die Steuerbefehle zum Steuern des VR-Geräts (10) durch ein fahrzeugseitiges Steuergerät (12) und/oder durch eine Prozessoreinheit (11) des VR-Geräts (10) erzeugt werden.

6. Verfahren nach Anspruch 5, wobei Fahrzeugdaten und/oder ausgewertete Fahrzeugdaten zwischen dem fahrzeugseitigen Steuergerät (12) und dem VR-Gerät (10) über eine als eine Bluetooth-Verbindung oder eine WLAN-Verbindung ausgestaltete Kommunikationsverbindung (14) übertragen werden.

7. Fahrzeuganordnung (1), aufweisend ein Fahrzeug (2) mit einem fahrzeugseitigen Steuergerät (12) und mindestens ein VR-Gerät (10), wobei die Fahrzeuganordnung (1) dazu eingerichtet ist, ein Verfahren gemäß einem der vorhergehenden Ansprüche auszuführen.

## Claims

1. A method for controlling a VR device (10), in particular VR glasses, of a user (8) in a vehicle interior (4) of a vehicle (2) via a communication link (14), wherein via the communication link (14) vehicle data are received and evaluated, or evaluated vehicle data are received, and, based on the evaluated vehicle data, at least one traffic event is categorized, and control commands for controlling the VR device (10) are generated, through which the user (8) of the VR device (10) is made aware of a reaction of the vehicle (2) to the event, the reaction being unforeseeable for the user (8), **characterized in that** control commands for controlling the VR device (10) signaling a need of a vehicle passenger (6) to communicate with the user (8) of the VR device (10) are generated.

2. The method according to claim 1, wherein the need of the vehicle passenger (6) to communicate with the user (8) of the VR device (10) is initiated by a vehicle-side input of the vehicle passenger (6).

3. The method according to claim 1 or 2, wherein the control commands are generated for outputting a message to a display of the VR device (10), activating a transparency of the VR device (10), outputting an acoustic or graphic notification, for pausing or ending an application of the VR device (10) and/or for deactivating a noise-canceling function.

4. The method according to any of claims 1 to 3, wherein the user (8) of the VR device (10) is made aware of a reaction of the vehicle (2) to the traffic event in the form of an activation of an emergency brake assistant, an avoidance maneuver of the vehicle (2), an arrival at or an approach to a destination, a triggered fatigue detection, or an object identified by a vehicle sensor (16).

5. The method according to any of claims 1 to 4, wherein the control commands for controlling the VR device (10) are generated by a vehicle-side control device (12) and/or by a processor unit (11) of the VR device (10).

6. The method according to claim 5, wherein vehicle data and/or evaluated vehicle data are transmitted between the vehicle-side control device (12) and the VR device (10) via a communication link (14) in the form of a Bluetooth link or WLAN link.

7. A vehicular arrangement (1), with a vehicle (2) having a vehicle-side control device (12) and at least one VR device (10), wherein the vehicular arrangement (1) is configured for executing a method according to any of the preceding claims.

## Revendications

1. Procédé de commande d'un dispositif de réalité virtuelle (10), en particulier de lunettes de réalité virtuelle, d'un utilisateur (8) dans un habitacle (4) d'un véhicule (2) par une liaison de communication (14), la liaison de communication (14) recevant et analysant des données de véhicule ou recevant des données de véhicule analysées, et au moins un événement de circulation étant classé à l'aide des données de véhicule analysées, et des instructions de commande du dispositif de réalité virtuelle (10) étant générées pour avertir l'utilisateur (8) du dispositif de réalité virtuelle (10) d'une réaction du véhicule (2), imprévisible pour l'utilisateur (8), à l'événement de circulation, **caractérisé en ce que** des instructions de commande du dispositif de réalité virtuelle (10) sont générées pour signaler un besoin de communication d'un passager du véhicule (6) avec l'utilisateur (8) du dispositif de réalité virtuelle (10).

2. Procédé selon la revendication 1, le besoin de communication du passager du véhicule (6) avec l'utilisateur (8) du dispositif de réalité virtuelle (10) étant initié par une saisie du passager du véhicule (6) réalisée à bord du véhicule.

3. Procédé selon la revendication 1 ou 2, les instructions de commande étant générées pour émettre un message dans un affichage du dispositif de réalité virtuelle (10), activer une transparence du dispositif de réalité virtuelle (10), émettre une notification sonore ou graphique, mettre en pause ou arrêter une application du dispositif de réalité virtuelle (10) et/ou annuler une fonction de réduction du bruit.

4. Procédé selon l'une des revendications 1 à 3, l'utilisateur (8) du dispositif de réalité virtuelle (10) étant averti d'une réaction du véhicule (2) à l'événement de circulation sous la forme d'une activation d'une assistance au freinage d'urgence, d'une manœuvre d'évitement du véhicule (2), d'une arrivée ou d'un rapprochement à une destination, d'un déclenchement d'une alerte à la somnolence ou d'un objet détecté par un système de capteurs du véhicule (16).

5. Procédé selon l'une des revendications 1 à 4, les instructions de commande du dispositif de réalité virtuelle (10) étant générées par un dispositif de commande (12) à bord du véhicule et/ou par une unité de processeur (11) du dispositif de réalité virtuelle (10).

6. Procédé selon la revendication 5, des données de véhicule et/ou des données de véhicule analysées étant transférées entre le dispositif de commande (12) à bord du véhicule et le dispositif de réalité virtuelle (10) par une liaison de communication (14) configurée comme une liaison Bluetooth ou une liaison WLAN.

7. Système automobile (1) présentant un véhicule (2) doté d'un dispositif de commande (12) à bord du véhicule et d'au moins un dispositif de réalité virtuelle (10), le système automobile (1) étant conçu pour mettre en œuvre un procédé selon l'une des revendications précédentes.
